# EUROPÄISCHE PATENTSCHRIFT

(11) **EP 0 878 122 B1**
(45) Veröffentlichungstag und Bekanntmachung des Hinweises auf die Patenterteilung: **03.09.2003**
(21) Anmeldenummer: 98104974.5
(22) Anmeldetag: 19.03.1998
(51) Int. Cl.: A01F 12/40

(54) **Mähdrescher**
Combine
Moissonneuse-batteuse

(30) Priorität: 14.05.1997 DE 19720074
(43) Veröffentlichungstag der Anmeldung: 18.11.1998
(73) Patentinhaber: CLAAS Selbstfahrende Erntemaschinen GmbH, 33428 Harsewinkel (DE)
(72) Erfinder: Roberg, Alfons, 33428 Harsewinkel (DE)

(56) Entgegenhaltungen:
- EP-A- 0 748 583
- EP-A- 0 832 553
- DE-A- 19 535 175
- DE-A- 19 547 355

## Beschreibung

Die Erfindung betrifft einen Mähdrescher mit einem Mähtisch und einem das Mähgut abtransportierenden Schrägförderer, dem ein Tangential- oder Axialdreschwerk nachgeschaltet ist, dem sich in Gutflußrichtung mindestens eine nach dem Axialflußverfahren arbeitende Trenneinrichtung anschließt, die je einen rotierend antreibbaren Trennrotor aufweist, der umfangsseitig mit spiral- oder wendelförmig verlaufenden Förderelementen bestückt ist und der von einem aus einer oberen Abdeckhaube und einem unteren Abscheidekorb gebildeten Gehäuse umschlossen ist, und das die Förderelemente jedes Trennrotors innerhalb eines bestimmten Bereiches der Förderstrecke aus die Spirale oder die Wendel weiterführenden Schlagzähnen gebildet sind, zwischen denen Radialschlitze liegen, die bedarfsweise mit feststehenden, einer Mulde des Gehäuses zugeordneten Häckselmessern zusammenwirken.

Aus den deutschen Patentanmeldungen DE 19600390 und DE 19640047 sind Mähdrescher bekannt, bei denen zum einen der Trennrotor im Bereich der Häckseleinrichtung von einer Vielzahl von Schneidrillen bildenden, mit Schlagzähnen versehenen Tragringen umgeben ist, die mit dem Rotormantel verschweißt oder verschraubt sind. Zum anderen wird ein hülsenartiges, ebenfalls den Bereich der Häckseleinrichtung überdeckendes Element auf den Rotor aufgeschoben und befestigt. In den Außenmantel der Hülse sind ringsum Schneidrillen eingeformt. Mit den sich bildenden Rillenstegen sind Schlagzähne verbunden oder angeformt. Als weitere Alternative wird noch vorgeschlagen, ein hülsenartiges Bauteil nach vorgenannter Art als Verbindungseinheit zwischen zwei Teilbereichen des Rotormantels einzubauen. Die hülsenartigen Teile können auch als Gußteil ausgebildet sein, wobei die Schneidrillen und die Schlagzähne gießtechnisch angeformt sind. Die zuvor beschriebenen, bekannten Ausrüstungen der Trennrotoren zum Häckseln von Erntegut sind bei der Anfangsmontage sowie bei erforderlichen Service-Arbeiten zum Beispiel zwecks Austausch von Verschleißteilen nur mit erheblichem Zeitaufwand und somit konstenintensiver Arbeit möglich, die soweit führen, daß der gesamte Trennrotor aus seinen Endlagerungen gelöst werden muß.

Der Erfindung liegt die Aufgabe zugrunde, einen Mähdrescher der eingangs näher beschriebenen Art so auszubilden, daß insbesondere bei Reparaturarbeiten das Auswechseln der Bauteile in kürzester Zeit erfolgen kann, wobei diese Bauteile möglichst einen geringen Umfang der gesamten Häckseleinrichtung darstellen. Darüberhinaus soll eine fertigungstechnisch einfache Lösung vorgeschlagen werden.

Die gestellte Aufgabe wird gelöst, indem zumindest die Schlagzähne einer spiral- oder wendelförmig verlaufenden Reihe ein Schlagzahnfunktionsteil bilden, welches lösbar am Grundkörper des Trennrotors befestigt ist, und das zwischen den Schlagzahnreihen Füllkörper angeordnet sind, die außenseitig mit Schneidrillen für die Häckselmesser versehen sind und am Grundkörper des Trennrotors anliegen. Bei dem erfindungsgemäßen Mähdrescher kann die Axialfluß-Häckseleinrichtung jedes Trennrotors nunmehr als eine Baueinheit angesehen werden, die, abgesehen von Befestigungselementen, aus einer durch die Schlagzahnreihen bestimmten Stückzahl von Schlagzahnfunktionsteilen und einer entsprechenden Anzahl von Füllkörpern besteht. Wenn also üblicherweise der Trennrotor mit vier Schlagzahnreihen bestückt ist, besteht diese Baueinheit aus acht Hauptteilen, unter der Voraussetzung, daß gemäß einer bevorzugten Ausführungsform jedes Schlagzahnfunktionsteil und jeder Füllkörper einstückig sind. Selbst wenn jedes Schlagzahnfunktionsteil aus zwei oder mehreren Einzelteilen bestehen würde ist die Anzahl der Bauteile gegenüber den bisher vorgeschlagenen Lösungen deutlich reduziert Die Schlagzähne sind als Verschleißteil anzusehen, die nach einer gewissen Betriebszeit ausgewechselt werden können. In diesem Fall werden Sie jeweils als Block ausgewechselt . Dies gilt auch, wenn beispielsweise eine Beschädigung durch Fremdkörper hervorgerufen wird, die bis in den Bereich der Axialfluß-Häckseleinrichtung gelangt sind. Die Füllkörper sind im Querschnitt ein Teil eines Kreisringes, wobei die Längskanten entsprechend der Anordnung der Schlagzähne in einer entsprechenden Spirale oder einer Wendel verlaufen. Die Schneidrillen bilden in ihrer Gesamtheit Radialnuten, in die die äußeren Enden der Häckselmesser eintauchen, sofern das Gut gehäckselt werden soll. Die Schneidrillen bewirken, daß das im unteren Bereich der von den Schlagzähnen begrenzten Radialschlitze sich befindende Halmgut unzerteilt oder in einer nicht gewünschten Länge die Axialfluß-Häckseleinrichtung durchläuft.

In weiterer Ausgestaltung ist vorgesehen, daß jeder zwischen zwei Schlagzahnreihen liegende Füllkörper einteilig ausgebildet und lösbar am Grundkörper des Trennrotors und/oder an wenigstens einem angrenzenden Schlagzahn-Funktionsteil befestigt ist Durch die einteilige Ausführung wird eine geringstmögliche Anzahl von Bauteilen erreicht, wobei der Aufwand zum Auswechseln oder zum Montieren eines Füllkörpers ebenfalls gering ist. Zweckmäßigerweise sind die Füllkörper aus einem metallischen Werkstoff im Gießverfahren oder aus einem Kunststoff im Spritzverfahren hergestellt. Bei der heutigen Gieß- oder Spritztechnik kann man davon ausgehen, daß trotz der geometrisch nicht genau zu definierenden Form der Füllkörper eine mechanische Bearbeitung entfallen kann. Die Schlagzahnfunktionsteile müssen beim Häckseln des Erntegutes relativ große Kräfte aufbringen. Deshalb sind auch sie aus einem metallischen Werkstoff gefertigt. Auch hier bietet sich ein Gießverfahren aufgrund der besonderen Form an. Damit auch während der kontinuierlichen Drehung des Trennrotors das zu häckselnde Gut gegen die Schlagzähne gedrückt wird, ist vorgesehen, daß die Füllkörper an der, Drehrichtung des Trennrotors gesehen, hinter der Schlagzahnreihe liegenden Längsseite abgeflacht sind. Dadurch wird die spiral- oder wendelförmig verlaufende Längsseite als Einlaufkeil ausgebildet. Die Abflachung ist so gestaltet, daß die Reduzierung der Dicke des Füllkörpers durch das Abflachen der Außenseite erfolgt, so daß die Innenfläche jedes Füllkörpers vollflächig am Grundkörper des Trennrotors anliegt.

Die kürzeste Länge des Häckselgutes wird durch den Abstand der Radialschlitze bestimmt. Die kürzeste Länge wird erreicht, wenn auch die feststehenden Häckselmesser in solchen Abständen zueinander stehen, die den Abständen der Radialschlitze entsprechen. Um die Länge des Häckselgutes noch zu verringern, ist vorgesehen, daß die Schlagzähne an ihren äußeren Umfangsflächen mit Schneidnuten zum Durchtritt für feststehende Häckselmesser versehen sind. Sofern zwischen jedem den Radialschlitzen zugeordneten Häckselmessern noch ein weiteres Häckselmesser angeordnet ist, kann man davon ausgehen, daß die Länge des Häckselgutes halbiert wird. Die Anordnung der Häckselmesser kann jedoch beliebig gewählt werden, so daß nach einem Schema bestimmten Radialschlitzen und bestimmten Schneidnuten Häckselmesser zugeordnet werden. Als besonders vorteilhaft hat sich bei einer solchen Anordnung herausgestellt, daß die Tiefen der Schneidnuten wesentlich geringer sind als die Tiefen der durch die Schlagzähne begrenzten Radialschlitze, so daß der Abstand der Grund jeder Schneidnut zur Drehachse des Trennrotors größer ist als der Abstand des Grundes jedes Radialschlitzes. Dadurch ergeben sich Häckselmesser mit unterschiedlichen Längen, so daß die äußeren, der Drehachse des Schneidrotors zugewandt liegenden Kanten oder Spitzen der Häckselmesser je nach deren Anordnung gegeneinander verspringen. Um einen fließenden Übergang zwischen den durch die Schlagzähne begrenzten Radialschlitze und den Schneidrillen der Füllkörper zu erreichen ist vorgesehen, daß der Grund jeder Schneidrille der Füllkörper abstandsgleich oder annähernd abstandsgleich zur Drehachse des Trennrotors liegt, wie der Grund jedes Radialschlitzes. Dadurch wird eine gleiche oder annähernd gleiche Umlaufbahn der für den Grund jeder Schneidrille und für den Grund jedes Radialschlitzes erreicht. Der Grund jeder Schneidnut der Schlagzähne verspringt dann in Richtung zu den Häckselmessern.

Die Anzahl der Bauteile für die Axialfluß-Häckseleinrichtung wird minimiert, wenn aus jedem Schlagzahn Funktionsteil und einen, in Drehrichtung des Trennrotors gesehen, dahinter liegenden Füllkörper ein einstückiges Formteil gebildet wird. Sofern der Trennrotor dann mit vier Reihen von Schlagzähnen bestückt ist, besteht die Baueinheit aus nur noch vier Hauptfunktionsteilen. Dieses Formteil könnte dann beispielsweise aus einem metallischen Werkstoff im Gießverfahren hergestellt werden. Für den Häckselvorgang ist besonders vorteilhaft, wenn das Häckselgut im Bereich vor den Häckselmessern verdichtet wird. Dies läßt sich in einfachster Weise erreichen, wenn die obere Abdeckhaube des Gehäuses sich im Bereich der Schlagzähne von den Verbindungen mit der Mulde des Gehäuses zum mittleren, oberen Bereich hin erweitert Dadurch wird vor den Häckselmessern ein sich verkleinernder Ringraum geschaffen.

Anhand der beiliegenden Zeichnungen wird die Erfindung noch näher erläutert. Es zeigen:
- Figur 1: einen erfindungsgemäßen Mähdrescher in einer schematischen Teilseitenansicht,
- Figur 2: einen Schnitt längs der Linie II-II in der Figur 1,
- Figur 3: eine Teilstirnansicht des Trennrotors im Bereich der Axialfluß-Häckseleinrichtung,
- Figur 4: eine Ansicht in Richtung des Pfeiles IV in der Figur 3,
- Figur 5: ein Schnitt längs der Linie V-V in der Figur 4,
- Figur 6: einen Schnitt längs der Linie VI-VI in der Figur 4,
- Figur 7: einen Füllkörper gemäß der Figur 2 in einer Seitenansicht,
- Figur 8: eine der Figur 7 entsprechende Draufsicht,
- Figur 9: einen Schnitt längs der Linie IX-IX in der Figur 8,
- Figur 10: einen Schnitt längs der Linie X-X in der Figur 8,
- Figur 11: eine weitere Ausführung des Trennrotors in einer perspektivischen, schematischen Darstellung, die Einstückigkeit der Schlagzähne mit den Füllkörpern zeigend und
- Figur 12: eine der Figur 11 entsprechende Stirnansicht.

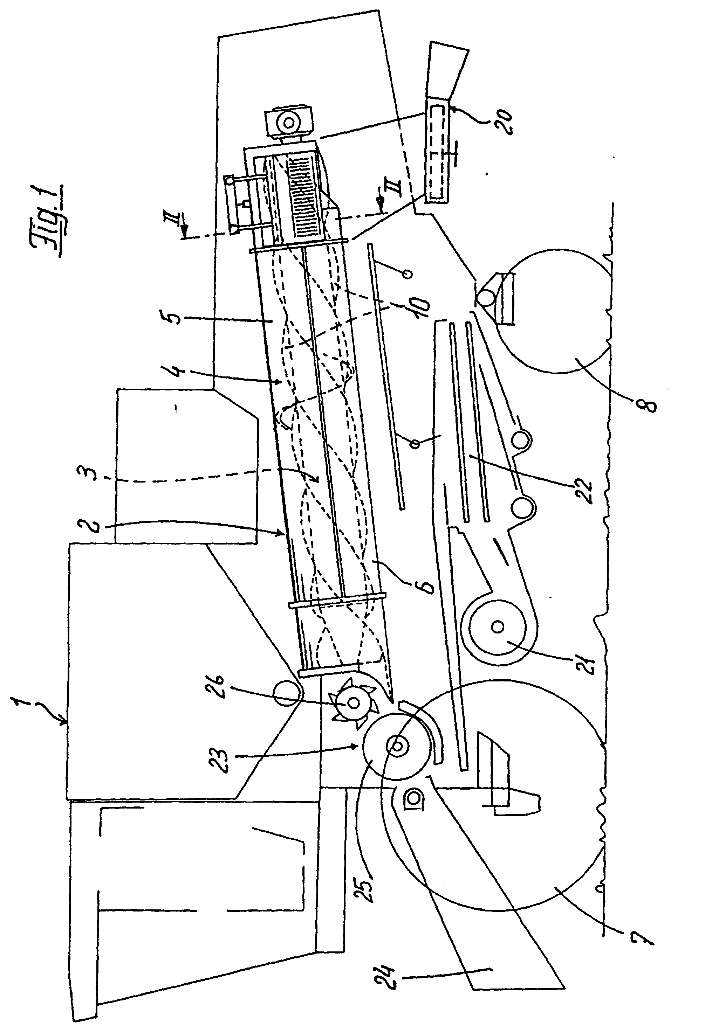

Der in der Figur 1 teilweise dargestellte Mähdrescher 1 ist mit einer nach dem Axialflußverfahren arbeitenden Trenneinrichtung 2 ausgerüstet, die im wesentlichen aus einem Trennrotor 3 oder auch zwei achsparallelen Trennrotoren 3 besteht. Der Trennrotor 3 bzw. die Trennrotoren 3 sind von einem Gehause 4 umschlossen. Dieses Gehause 4 besteht aus einem Oberteil in Form einer Haube 5 und einem Unterteil in Form eines Abscheidekorbes 6. Im dargestellten Ausführungsbeispiel liegt die Drehachse jedes Trennrotors 3 quer zu den Radachsen der Räderpaare 7, 8. Demzufolge ist die Förderrichtung jedes Trennrotors 3 entgegengesetzt zur Vorwärtsfahrtrichtung des Mähdreschers 1. Ferner ist im dargestellten Ausführungsbeispiel die Drehachse jedes Trennrotors 3 gegen die Horizontale geneigt, wobei sie nach hinten, d.h. dem Abgabeende des Trennrotors 3 ansteigt. Ferner ist im dargestellten Ausführungsbeispiel das Austrageende jedes Trennrotors 3 als Axialfluß-Häckseleinrichtung zum Häckseln des Strohes ausgebildet, die noch näher erläutert wird. Um das Dreschgut kontinuierlich zu transportieren, sind auf dem Grundkörper 9 des Trennrotors 3 mehrere wendel- oder spiralförmig verlaufende Förderleisten 10 aufgesetzt. Im Bereich der Axialfluß-Häckseleinrichtung sind im dargestellten Ausführungsbeispiel auf den Grundkörper 9 des Trennrotors 3 vier Reihen von Schlagzähnen 11 aufgesetzt, die wendel- oder spiralförmig verlaufen und zur Bildung von Radialschlitzen 12 im Abstand zueinander stehen. Die Schlagzähne 11 sind so gesetzt, daß sie die axiale Förderwirkung aufrecht erhalten, da sie die Wendel oder Spirale der Förderleisten 10 fortsetzen. Achsparallel zur Drehachse jedes Trennrotors 3 verläuft außerhalb eine Aufnahmewelle 13, die in einer Reihe angeordnete Häckselmesser 14 trägt, die bei Drehung des Trennrotors 3 durch die Radialschlitze 12 hindurchtreten. Zwischen den aus den Schlagzähnen 11 gebildeten Reihen sind auf dem Grundkörper 9 jedes Trennrotors 3 Füllkörper 15 lösbar befestigt. Die Füllkörper 15 sind an der äußeren, dem Grundkörper 9 abgewandten Seite mit Schneidrillen 16 versehen, die zusammen mit den Radialschlitzen 12 der Schlagzähne 11 Radialnuten bilden, so daß die Häckselmesser 14 auch in die Schneidrillen 16 mit ihren freien Enden eintauchen.

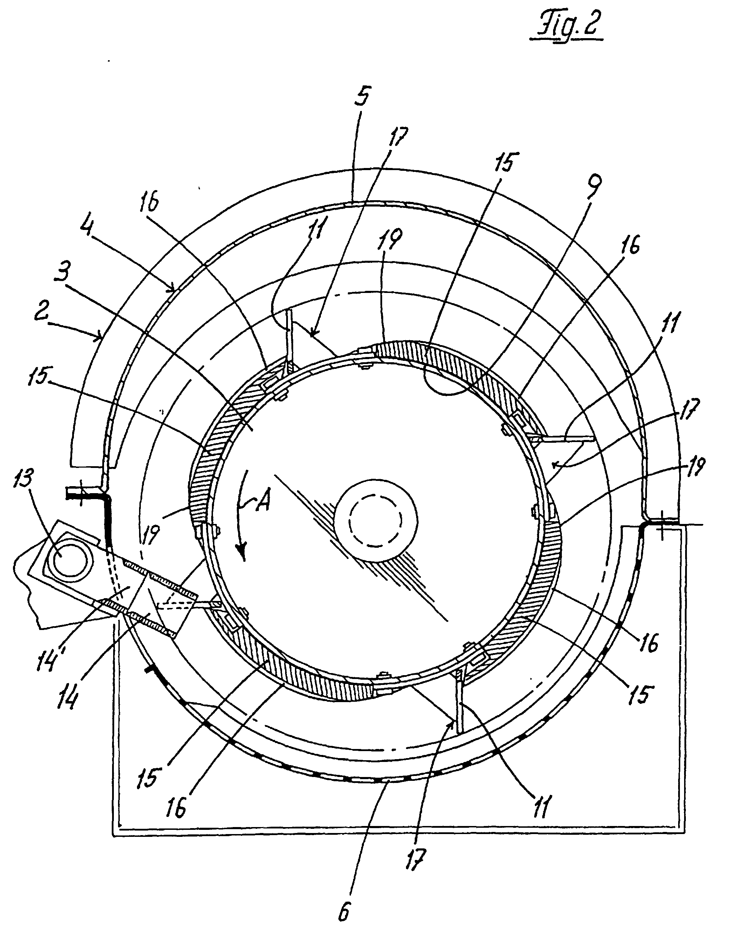

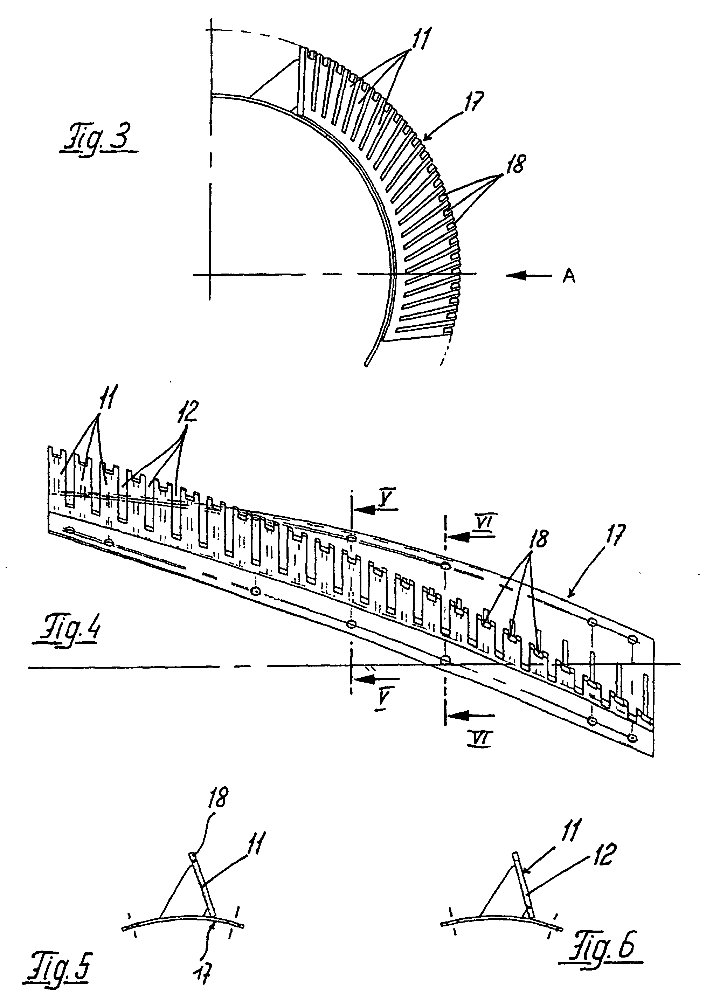

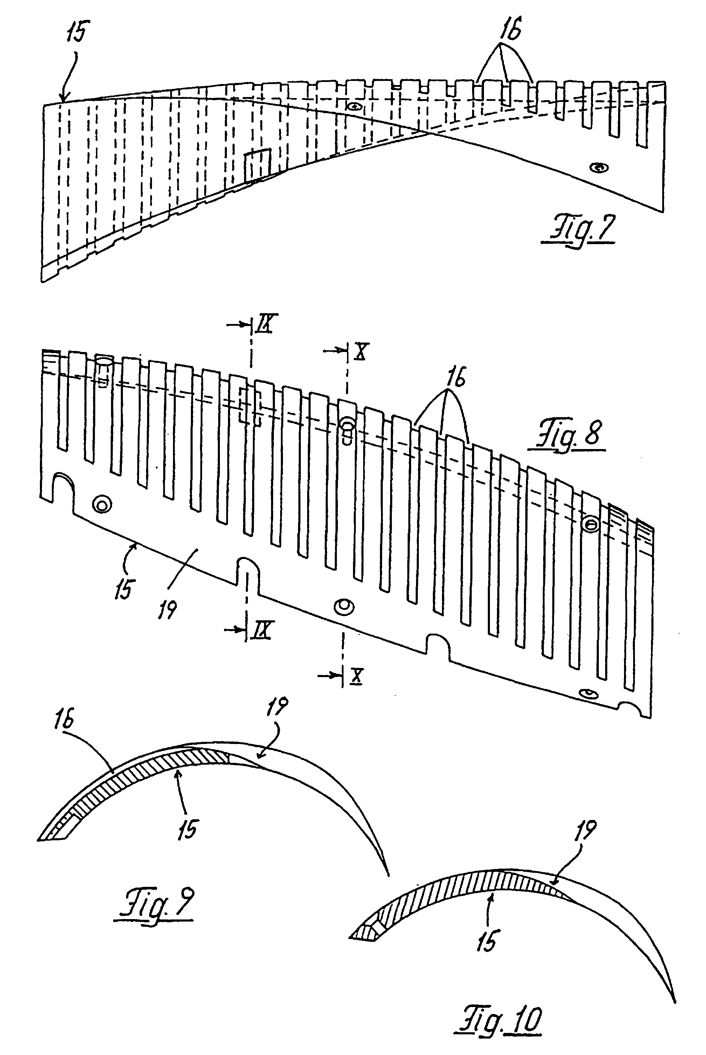

Die Figuren 3 bis 6 zeigen, daß jede aus den Schlagzähnen 11 gebildete Reihe als ein einstükkiges Schlagzahnfunktionsteil 17 ausgebildet ist, welches entsprechend der Anordnung der Förderleisten 10 geformt ist, so daß die beiden Längskanten auch wendel- oder spiralförmig verlaufen. Im Querschnitt beschreibt das Schlagzahnfunktionsteil 17 einen Teil eines Kreisringes, wie insbesondere die Figur 2 und 3 zeigen. Ferner ist erkennbar, daß im Bereich der Längsränder das Schlagzahnfunktionsteil 17 durch Schrauben mit dem Grundkörper 9 des Trennrotors 3 lösbar verbunden ist. Dazu sind die Schlagzähne 11 mit einem der Kontur des Grundkörpers 9 entsprechenden Flansch versehen. Die Figuren 3 und 4 zeigen in Verbindung mit der Figur 5, daß die äußeren Enden der Schlagzähne 11, die der Drehachse des Trennrotors 3 abgewandt liegen mit Schneidnuten 18 versehen sind, deren Tiefen, bezogen auf die Höhen der Schlagzähne 11 relativ gering sind. Zur Reduzierung der Länge des Häckselgutes könnte die Aufnahmewelle 13 noch mit einer entsprechenden Stückzahl von kürzeren Häckselmessern 14' bestückt werden. Je nach Belieben können jedoch die Radialschlitze 12 und die Schneidnuten 18 nach einem System wahlweise benutzt werden, beispielsweise das jedem Radialschlitz 12 ein Häckselmesser 14 und jeder zweiten oder dritten Schneidnut 18 innerhalb der Reihe eine weiteres Häckselmesser 14' zugeordnet ist. Insbesondere aus der Figur 6 geht hervor, daß die Tiefen der Radialschlitze 12 deutlich größer sind als die der Schneidnuten 18, so daß jeder Grund eines Radialschlitzes 12 in einem kleineren Abstand zur Drehachse des Trennrotors 3 steht als der Grund jeder Schneidnut 18. Dadurch werden Häckselmesser unterschiedlicher Länge notwendig, da sichergestellt sein muß, daß die der Drehachse des Trennrotors 3 zugewandten Kanten oder Spitzen in einem möglichst geringen Abstand zum Grund jeder Schneidnut 18 oder zum Grund jedes Radialschlitzes 12 stehen. Aus Gründen der vereinfachten Darstellung zeigt die Figur 3 nur eine Teilstirnansicht über den Bereich eines Funktionsteiles 17. In der dargestellten Ausführung wird aus jeder Reihe von Schlagzähnen 11 ein einziges Schlagzahnfunktionsteil 17 gebildet. Bei einer relativ großen Länge könnte eine einzige Reihe von Schlagzähnen 11 auch mehrere Schlagzahnfunktionsteile bilden. Insbesondere die Figur 2 zeigt, daß, in Drehrichtung A des Trennrotors 3 gesehen, die Füllkörper 15 an der hinter den Schlagzahnreihen 11 liegenden Längsseite keilförmig abgeflacht sind, um einen kontinuierlichen Übergang des Häckselgutes in den Häckslerbereich zu gewährleisten.

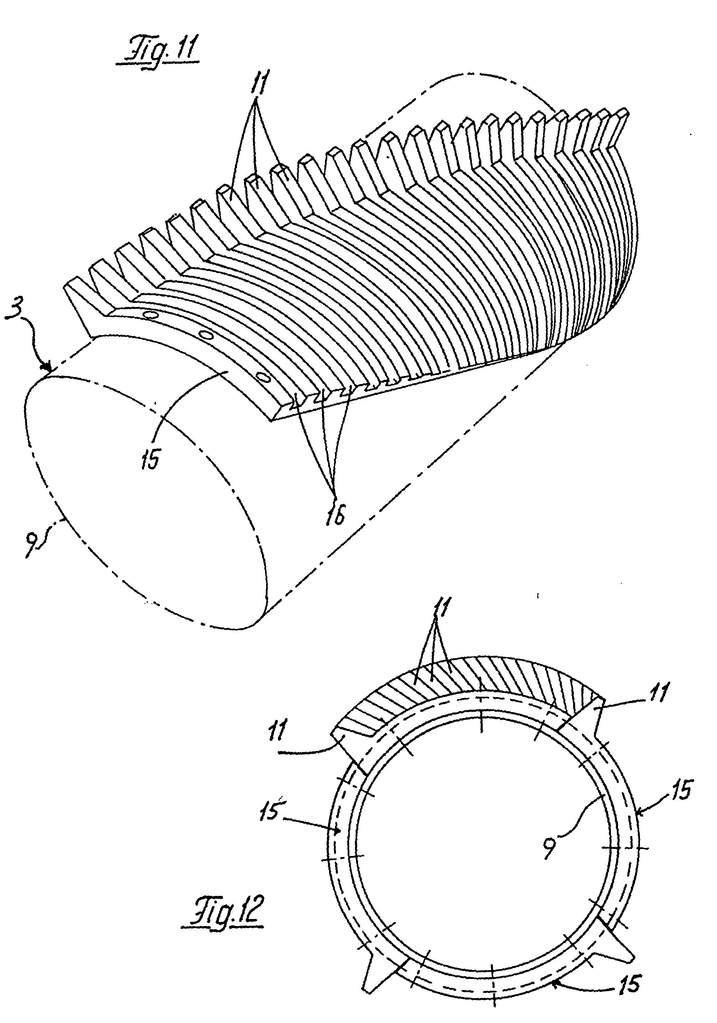

Die Figuren 7 bis 10 zeigen die einstückige Ausbildung der Füllkörper 15. Die beiden Längskanten verlaufen entsprechend der wendel- oder spiralförmigen Anordnung der Schlagzähne 11 auf dem Trennrotor 3. Die Schneidrillen 16 sind in einem gleichbleibenden Abstand zueinander angeordnet und stehen schräg zu den Längskanten, jedoch fluchtend zu den Radialschlitzen 12, die durch die Schlagzahne 11 begrenzt sind. Die Figuren 9 und 10 zeigen, daß jeder Füllkörper 15 im Querschnitt als Viertelkreis ausgebildet ist, wie die schraffierten Flachen zeigen. Außerdem zeigen die Figuren 2, 9 und 10, daß die Füllkörper 15 an der in Drehrichtung A des Trennrotors 3 vorn liegenden Randbereich, der dann hinter der Schlagzahnreihen 11 liegt, keilförmig abgeflacht ist, um einen kontinuierlichen Übergang des Häckselgutes aus dem vorderen Rotorbereich in die Häckseleinrichtung zu gewährleisten. Diese Abflachung ist durch das Bezugszeichen 19 gekennzeichnet. Wie die Figur 10 zeigt, werden die Füllkörper 15 mittels Senkkopfschrauben mit dem Grundkörper 9 des Trennrotors 3 verschraubt. An beiden Längsrändern sind sie außerdem mit Ausnehmungen für die das Schlagzahnfunktionsteil 17 festlegenden Schrauben versehen.

Die Figur 11 zeigt das Prinzip der Schlagzähne 11 in Verbindung mit den Füllkörpern 15. Daraus geht deutlich hervor, daß die Schlagzähne 15 innerhalb der Reihe in einem Winkelversatz zueinander stehen, und daß die Füllkörper 15 sich über ein gleichbleibendes Bogenmaß erstrecken, so daß deren Längskanten entsprechend dem Verlauf der Schlagzähne 11 gestaltet sind. Durch die Figuren 11 und 12 soll auch dargestellt werden, daß die Schlagzähne 11 und ein danebenliegender Füllkörper 15 ein einteiliges Formteil bilden, wodurch die Anzahl der Bauteile minimiert ist. Aus Gründen der vereinfachten Darstellung ist in den Figuren 11 und 12 nur eine Reihe von Schlagzähnen 15 dargestellt.

In den dargestellten Ausführungebeispielen ist der Trennrotor 3 mit vier Reihen von Schlagzähnen 11 versehen. Er kann jedoch auch mit einer davon abweichenden Anzahl bestückt werden. Die Figur 2 zeigt noch, daß das Gehäuse 4 oberhalb der Rotoren 3 in etwa ausgehend von der Waagerechten Mittelachse des Rotors einen größeren Abstand als die restliche bodenseitige Umhüllung zum Rotor 3 einnimmt und damit einen weiteren Ringspalt bildet, der sich in Drehrichtung zu den Häckselmessern hin verengt, wodurch das zu fördernde Gut verdichtet in die Häckselmesser gelangt. Die Figur 2 zeigt außerdem, daß die Häckselmesser 14 an zwei einander gegenüberliegenden Längskanten Schneiden aufweisen

Die Figur 1 zeigt auch, daß hinter dem Trennrotor 3 noch eine Verteileinrichtung 20 für das Häckselgut nachgeschaltet ist. Der in der Figur 1 nur teilweise dargestellte Mähdrescher 1 ist ferner noch mit einem unterhalb des Trennrotors 3 liegenden Gebläse 21 und einer ebenfalls unter dem Trennrotor 3 liegenden Siebeinrichtung 22 ausgerüstet. Außerdem ist der Mähdrescher 1 in an sich bekannter Weise mit einem nicht dargestellten Mähtisch und einem das Mähgut zu einem Dreschwerk 23 fördernden Schrägförderer 24 ausgerüstet, von dem nur das hintere Ende dargestellt ist. Das Dreschwerk 23 beinhaltet eine Dreschtrommel 25 und eine Übergabetrommel 26, die unmittelbar vor dem Aufgabeende des Trennrotors 3 quer zu dessen Drehachse gelagert ist. Im Gegensatz zu der dargestellten Ausführung könnte jedoch die Drehachse des Trennrotors 3 auch achsparallel zu den Achsen der Räderpaare 7, 8 stehen.

### Bezugszeichenliste

- 1: Mähdrescher
- 2: Trenneinrichtung
- 3: Trennrotor
- 4: Gehäuse
- 5: Haube
- 6: Abscheidekorb
- 7,8: Räderpaar
- 9: Grundkörper
- 10: Förderleisten
- 11: Schlagzähne
- 12: Radialschlitze
- 13: Aufnahmewelle
- 14: Häckselmesser
- 14': kürzere Häckselmesser
- 15: Füllkörper
- 16: Schneidrillen
- 17: Schlagzahnfunktionsteil
- 18: Schneidnuten
- 19: Abflachung
- 20: Verteileinrichtung
- 21: Gebläse
- 22: Siebeinrichtung
- 23: Dreschwerk
- 24: Schrägförderer
- 25: Dreschtrommel
- 26: Ubergabetrommel

## Patentansprüche

1. Mähdrescher mit einem Mähtisch und einem das Mähgut abtransportierenden Schrägförderer, dem ein Tangential- oder Axialdreschwerk nachgeschaltet ist, dem sich in Gutflußrichtung mindestens eine nach dem Axialflußverfahren arbeitende Trenneinrichtung anschließt, die je einen rotierend antreibbaren Trennrotor aufweist, der umfangsseitig mit spiral- oder wendelförmig verlaufenden Förderelementen bestückt ist und der von einem aus einer oberen Abdeckhaube und einem unteren Abscheidekorb gebildeten Gehäuse umschlossen ist, und daß die Förderelemente jedes Trennrotors innerhalb eines bestimmten Bereiches der Förderstrecke aus die Spirale oder die Wendel weiterführenden Schlagzähnen gebildet sind, zwischen denen Radialschlitze liegen, die bedarfsweise mit feststehenden, einer Mulde des Gehäuses zugeordneten Häckselmessern zusammen wirken,
**dadurch gekennzeichnet,**
**daß** zumindest die Schlagzähne (11) einer spiral- oder wendelförmig verlaufenden Reihe ein Schlagzahnfunktionsteil (17) bilden, welches lösbar am Grundkörper (9) des Trennrotors (3) befestigt ist, und daß zwischen den Schlagzahnreihen (11) Füllkörper (15) angeordnet sind, die außenseitig mit Schneidrillen (16) für die Häckselmesser (14) versehen sind und die am Grundkörper (9) des Trennrotors (3) anliegen.

2. Mähdrescher nach Anspruch 1,
**dadurch gekennzeichnet,**
**daß** das aus den Schlagzähnen (11) einer Reihe gebildete Schlagzahnfunktionsteil (17) einstückig ausgebildet ist.

3. Mähdrescher nach Anspruch 1 oder 2,
**dadurch gekennzeichnet,**
**daß** jeder zwischen zwei Reihen von Schlagzähnen (11) liegende Füllkörper (15) einteilig ausgebildet und lösbar am Grundkörper (9) des Trennrotors (3) und/oder an wenigstens einem angrenzenden Schlagzahnfunktionsteil (17) befestigt ist

4. Mähdrescher nach einem oder mehreren der vorhergehenden Ansprüche I bis 3,
**dadurch gekennzeichnet,**
**daß** die Füllkörper (15) aus einem metallischen Werkstoff im oder aus einem Kunststoff hergestellt sind.

5. Mähdrescher nach einem oder mehreren der vorhergehenden Ansprüche 1 bis 4,
**dadurch gekennzeichnet,**
**daß** die Füllkörper an der - in Drehrichtung des Trennrotors (3) gesehen, hinter der Schlagzahnreihe (11) liegenden Längsseite abgeflacht sind.

6. Mähdrescher nach Anspruch 1,
**dadurch gekennzeichnet,**
**daß** die Schlagzähne (11) an ihren äußeren Umfangsflächen mit Schneidnuten (18) zum Durchtritt für feststehende Häckselmesser (14') versehen sind.

7. Mähdrescher nach Anspruch 6,
**dadurch gekennzeichnet,**
**daß** die Tiefen der Schneidnuten (18) wesentlich geringer sind als die Tiefen der durch die Schlagzähne (11) begrenzten Radialschlitze (12), so daß der Abstand des Grundes jeder Schneidnut (18) zur Drehachse des Trennrotors größer ist als der Abstand des Grundes jedes Radialschlitzes (12).

8. Mähdrescher nach einem oder mehreren der vorhergehenden Ansprüche 1 bis 7,
**dadurch gekennzeichnet,**
**daß** der Grund jeder Schneidrille (16) eines Füllkörpers (15) abstandsgleich oder annähernd abstandsgleich wie der Grund jedes Radialschlitzes (12) zur Drehachse des Trennrotors (3) liegt.

9. Mähdrescher nach einem oder mehreren der vorhergehenden Ansprüche 1 bis 8,
**dadurch gekennzeichnet,**
**daß** aus jedem Schlagzahnfunktionsteil (17) und einem, in Drehrichtung des Trennrotors gesehen, dahinter liegenden Füllkörpers (15) ein einstückiges Formteil gebildet ist.

10. Mähdrescher nach einem oder mehreren der vorhergehenden Ansprüche 1 bis 9,
**dadurch gekennzeichnet,**
**daß** die obere Abdeckhaube (5) des Gehäuses (4) sich im Bereich der Schlagzähne (11) des Trennrotors (3) von den Verbindungen mit dem Abscheidekorb (6) zum oberen, mittleren Bereich hin erweitert.

## Claims

1. A combine harvester comprising a cutter table and an inclined conveyor which transports the cut material away and downstream of which is connected a tangential or axial threshing mechanism which is followed in the direction of flow of the material by at least one separating device which operates on the basis of the axial flow process and which has a respective rotatably drivable separating rotor which is equipped at its periphery with conveyor elements extending in a spiral or helical configuration and which is enclosed by a housing formed from an upper cover hood and a lower cover hood, and the conveyor elements of each separating rotor are formed within a given region of the conveyor section from beater teeth which continue the spiral or the helix and between which are disposed radial slots which if necessary co-operate with fixed chopper blades associated with a trough of the housing, **characterised in that** at least the beater teeth (11) of a spirally or helically extending row form a beater tooth functional member (17) which is releasably fixed to the main body (9) of the separating rotor (3) and that arranged between the beater tooth rows (11) are filling bodies (15) which are provided on the outside with cutting channels (16) for the chopper blades (14) and which bear against the main body (9) of the separating rotor (3).

2. A combine harvester according to claim 1 **characterised in that** the beater tooth functional member (17) formed from the beater teeth (11) of a row is made in one piece.

3. A combine harvester according to claim 1 or claim 2 **characterised in that** each filling body (15) between two rows of beater teeth (11) is of a one-piece configuration and is fixed releasably to the main body (9) of the separating rotor (3) and/or to at least one adjoining beater tooth functional member (17).

4. A combine harvester according to one or more of preceding claims 1 to 3 **characterised in that** the filling bodies (15) are made from a metallic material or a plastic material.

5. A combine harvester according to one or more of preceding claims 1 to 4 **characterised in that** the filling bodies are flattened at the longitudinal side which - viewed in the direction of rotation of the separating rotor (3) is behind the beater tooth row (11).

6. A combine harvester according to claim 1 **characterised in that** at their outer peripheral surfaces the beater teeth (11) are provided with cutting grooves (18) for fixed chopper blades (14') to pass therethrough.

7. A combine harvester according to claim 6 **characterised in that** the depths of the cutting grooves (18) are substantially less than the depths of the radial slots (12) delimited by the beater teeth (11) so that the spacing of the bottom of each cutting groove (18) relative to the axis of rotation of the separating rotor is greater than the spacing of the bottom of each radial slot (12).

8. A combine harvester according to one or more of preceding claims 1 to 7 **characterised in that** the bottom of each cutting channel (16) of a filling body (15) is at the same spacing or approximately the same spacing as the bottom of each radial slot (12) relative to the axis of rotation of the separating rotor (3).

9. A combine harvester according to one or more of preceding claims 1 to 8 **characterised in that** an integral shaped member is formed from each beater tooth functional member (17) and a filling member (15) which, as viewed in the direction of rotation of the separating rotor, is disposed therebehind.

10. A combine harvester according to one or more of preceding claims 1 to 9 **characterised in that** the upper cover hood (5) of the housing (4) enlarges in the region of the beater teeth (11) of the separating rotor (3) from the connections to the concave (6) to the upper central region.

## Revendications

1. Moissonneuse-batteuse avec un tablier de coupe et un convoyeur pour l'évacuation du produit récolté, derrière lequel est disposé un mécanisme de battage tangentiel ou axial suivi dans la direction d'écoulement du produit d'au moins un séparateur travaillant selon le principe du flux axial, lequel séparateur comprend un rotor de séparateur entraîné en rotation, qui est pourvu sur son pourtour extérieur d'éléments transporteurs agencés en spirale ou en hélice et est entouré d'une enveloppe formée d'un capot supérieur et d'une grille de séparation inférieure, les éléments transporteurs de chaque rotor de séparateur, à l'intérieur d'une zone déterminée du trajet de transport, étant formés par des dents de battage qui s'étendent à partir de la spirale ou de l'hélice et entre lesquelles sont aménagées des fentes radiales qui coopèrent selon le cas avec des couteaux fixes associés à une zone de l'enveloppe, **caractérisée en ce qu'**au moins les dents de battage (11) d'une rangée agencée en spirale ou en hélice forment un élément fonctionnel (17) à dents de battage, qui est fixé de manière démontable au corps de base (9) du rotor de séparateur (3), et **en ce qu'**entre les rangées de dents de battage (11) sont disposés des corps de remplissage (15), qui sont pourvus côté extérieur de sillons de coupe (16) pour les couteaux de hachage (14) et sont appliqués sur le corps de base (9) du rotor de séparateur (3).

2. Moissonneuse-batteuse selon la revendication 1, **caractérisée en ce que** l'élément fonctionnel (17) à dents de battage formé par une rangée de dents de battage (11) est réalisé d'une pièce.

3. Moissonneuse-batteuse selon la revendication 1 ou 2, **caractérisée en ce que** chaque corps de remplissage (15) disposé entre deux rangées de dents de battage (11) est réalisé d'une pièce et est fixé de manière démontable au corps de base (9) du rotor de séparateur (3) et/ou à au moins un élément fonctionnel (17) à dents de battage voisin.

4. Moissonneuse-batteuse selon une ou plusieurs des revendications précédentes 1 à 3, **caractérisée en ce que** les corps de remplissage (15) sont réalisés en un matériau métallique ou en matière plastique.

5. Moissonneuse-batteuse selon une ou plusieurs des revendications précédentes 1 à 4, **caractérisée en ce que** les corps de remplissage (15) sont aplatis au niveau de leur grand côté situé derrière la rangée de dents de battage (11), vu dans la direction de rotation du rotor de séparateur (3).

6. Moissonneuse-batteuse selon la revendication 1, **caractérisée en ce que** les dents de battage (11), sur leur surface périphérique extérieure, sont pourvues de rainures de coupe (18) pour le passage de couteaux de hachage (14') fixes.

7. Moissonneuse-batteuse selon la revendication 6, **caractérisée en ce que** la profondeur des rainures de coupe (18) est sensiblement inférieure à la profondeur des fentes radiales (12) délimitées par les dents de battage (11), de sorte que la distance du fond de chacune des rainures de coupe (18) par rapport à l'axe de rotation du rotor de séparateur est supérieure à la distance du fond de chaque fente radiale (12).

8. Moissonneuse-batteuse selon une ou plusieurs des revendications précédentes 1 à 7, **caractérisée en ce que** le fond de chaque sillon de coupe (16) d'un corps de remplissage (15) est situé à la même distance ou sensiblement à la même distance que le fond de chaque fente radiale (12) par rapport à l'axe de rotation du rotor de séparateur (3).

9. Moissonneuse-batteuse selon une ou plusieurs des revendications précédentes 1 à 8, **caractérisée en ce que** chaque élément fonctionnel (17) à dents de battage et un corps de remplissage (15) situés derrière celui-ci, vu dans la direction de rotation du rotor, de séparateur forment un élément moulé monobloc.

10. Moissonneuse-batteuse selon une ou plusieurs des revendications précédentes 1 à 9, **caractérisée en ce que** le capot supérieur (5) de l'enveloppe (4), dans la région des dents de battage (11) du rotor de séparateur (3), s'élargit depuis les liaisons avec la grille de séparation (6) jusqu'à la partie médiane supérieure.
